# FASCICULE DE BREVET EUROPEEN

(11) **EP 0 930 089 B1**
(45) Date de publication et mention de la délivrance du brevet: **07.08.2002**
(21) Numéro de dépôt: 99400061.0
(22) Date de dépôt: 12.01.1999
(51) Int. Cl.: B01D 53/04, B01J 20/18

(54) **Procédé de purification par adsorption de l'air avant distillation cryogenique**
Verfahren zur Reinigung von Luft mittels Adsorption vor kryogener Lufttrennung
Process for air purification using adsorpion before cryogenic distillation

(30) Priorité: 14.01.1998 FR 9800303
(43) Date de publication de la demande: 21.07.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Millet, Cyrille, 75014 Paris (FR); Bourgeois, Philippe, 75017 Paris (FR); Kraus, Georges, 75006 Paris (FR); Gabillard, Jean-Pierre, 78610 Auffargis (FR)
(74) Mandataire: Pittis, Olivier

(56) Documents cités:
- EP-A- 0 667 183
- EP-A- 0 718 024
- DE-A- 3 702 190
- GB-A- 1 551 348
- GB-A- 1 589 213
- US-A- 5 258 058
- RALPH T. YANG: "Gas Separation by Adsorption Processes", 1987, BUTTERWORTH PUBLISHERS, STONEHAM, MA02180 (USA)

## Description

La présenté invention se rapporte à un procédé pour éliminer le dioxyde de carbone et de l'éthylène contenus dans un flux gazeux et, plus particulièrement, à la purification de l'air en ses impuretés dioxyde de carbone et de l'éthylène, et éventuellement vapeur d'eau et hydrocarbures, avant distillation cryogénique dudit air.

Avant de pouvoir être utilisé dans un procédé industriel, certains gaz nécessitent d'être, au préalable débarrassés des impuretés qu'ils contiennent.

Ainsi, l'air atmosphérique qui contient environ 250 ppm à 500 ppm de dioxyde de carbone (CO₂) et une quantité variable de vapeur d'eau et hydrocarbures, doit être débarrassé desdites impuretés CO₂ et éventuellement H₂O et hydrocarbures, préalablement à toutes opérations de séparation cryogénique dudit air, notamment par distillation cryogénique.

En effet, en l'absence d'un tel prétraitement de l'air, lesdites impuretés CO₂ et éventuellement H₂O et hydrocarbures qui s'y trouvent se solidifierait à basse température et l'on assisterait ensuite, à un colmatage des colonnes de distillation qui conduirait, d'une part, à une dégradation possible des équipements et, d'autre part, à une séparation incorrecte des différents constituants de l'air, tel l'azote ou l'oxygène.

En outre, les hydrocarbures susceptibles d'être présents dans l'air atmosphérique peuvent, dans certains cas, s'accumuler dans l'oxygène liquide de la boîte froide et, pour des raisons évidentes de sécurité, il est alors nécessaire de réduire au niveau le plus bas possible leur concentration dans ledit oxygène liquide pour éviter ainsi toute détérioration de l'installation.

Une première technique pour éliminer lesdites impuretés CO₂ et H₂O contenues dans un flux gazeux, tel l'air, consiste à réfrigérer ces impuretés, c'est-à-dire obtenir une solidification ou cristallisation desdites impuretés à basse température.

Toutefois, cette technique est très pénalisante du point de vue des coûts énergétiques et en équipement.

Une alternative à cette technique réside dans l'élimination du dioxyde de carbone, et éventuellement de l'eau, contenu dans le flux gazeux à traiter par adsorption desdites impuretés sur un adsorbant adéquat.

Les matériaux de type zéolite sont les adsorbants les plus couramment utilisés dans les procédés de séparation des gaz par adsorption.

Ainsi, le document US-A-3885927 décrit l'utilisation d'une zéolite X échangée à au moins 90% par des cations baryum, laquelle a une capacité d'adsorption du CO₂ supérieure de 40% environ à une zéolite X ne contenant que des cations sodium.

En outre, le document EP-A-0284850 décrit un procédé de purification d'un flux gazeux par adsorption sur une zéolite de type faujasite dont le rapport Si/Al est de 1 à 2,5, laquelle faujasite est échangée à au moins 90% par des cations divalents, tels les cations strontium ou baryum.

Par ailleurs, le document US-A-4775396 décrit l'adsorption préférentielle du dioxyde de carbone contenu dans un gaz non acide, tels l'azote, l'hydrogène et le méthane, par un procédé PSA (Pressure Swing Adsorption) sur un lit d'adsorption fixe contenant une zéolite de type faujasite échangée à au moins 20% par des cations du groupe par le zinc, les terres rares, l'hydrogène et l'ammonium et échangée à au plus 80% par des cations de métal alcalin ou alcalino-terreux.

Le document FR-A-2335258 décrit, quant à lui, un procédé d'épuration de mélanges de gaz comprenant de l'azote, de l'hydrogène, de l'argon et/ou de l'oxygène, et renfermant des impuretés monoxyde de carbone, dioxyde de carbone et eau, par adsorption desdites impuretés sur des zéolites de type A ou X à une température comprise entre -40 et +4°C.

Ce document décrit des zéolites de type A échangées de 70 à 82% par des ions calcium et dont le rapport Si/Al est d'au plus 1, et des zéolites de type X échangées ou non échangées dont le rapport Si/Al est compris entre 1.15 et 1.5.

Classiquement, les zéolites X dont le rapport Si/Al est- inférieur à 1.15 sont appelées LSX (Low Silica X-zeolite) ou zéolite pauvre en silice.

De même, le document EP-A-0718024 décrit l'élimination de CO₂ contenu dans un flux gazeux par adsorption dudit CO₂ sur une zéolite X dont le rapport Si/Al est au maximum d'environ 1.15 à une température comprise entre -50°C et 80°C environ. ce document décrit, en outre, des résultats obtenus en utilisant des zéolites X ou LSX non échangées ou échangées avec des cations lithium et calcium ou terres rares.

Par ailleurs, on peut citer également le document EP-A-0667183 décrivant l'utilisation de zéolites X contenant de 50 à 95% de cations lithium, de 4 à 50% de cations aluminium, cérium, lanthane ou des mélanges de lanthanides, et de 0 à 15% d'autres cations.

En outre, il existe aussi les documents GB-A-1589213, US-A-5258058 et GB-A-1551348 décrivant des procédés de purification de mélanges gazeux au moyen de diverses zéolites échangées ou non-échangées.

Le but de la présente invention est d'améliorer les procédés classiques visant à éliminer le CO₂ et l'éthylène, et éventuellement l'eau et les hydrocarbures contenus dans un flux gazeux, en particulier, dans un flux d'air devant subir une étape subséquente de séparation cryogénique, de sorte de permettre une réduction du volume des adsorbeurs et donc de la quantité d'adsorbant à utiliser, de diminuer les pertes de charge au sein du ou des lits d'adsorbants, de réduire le temps de régénération de l'adsorbant et/ou de réduire les coûts.

En effet, obtenir un arrêt efficace de plusieurs impuretés contenues dans un flux d'air à épurer nécessite d'utiliser un adsorbant dont les propriétés d'adsorption sont judicieusement choisies et dont le cotit soit économiquement acceptable pour une unité industrielle donnée.

La présente invention concerne alors un procédé de séparation du dioxyde de carbone (CO₂) et de l'éthylène contenus dans un flux gazeux, dans lequel on adsorbe le dioxyde de carbone et l'éthylène sur un lit unique formé d'une zéolite X ayant un rapport Si/Al de 1 à 1.5 environ et contenant au maximum 35% de cations K⁺, au moins 1% de cations Na⁺ et de 30 à 99% de cations Ca²⁺.

Selon le cas le procédé de l'invention peut comprendre l'une ou plusieurs des caractéristiques suivantes:
- la zéolite a un rapport Si/Al de 1 à 1.15, de préférence de 1 à 1.10 environ, de préférence de l'ordre de 1;
- la zéolite contient de 0.01% à 25% de cations K⁺, de préférence moins de 12% de cations K⁺;
- la zéolite contient au moins 50% de cations Ca²⁺, de préférence au moins 66% de cations Ca²⁺, de préférence de 80 à 96% de cations Ca²⁺;
- la zéolite contient de 82 à 92% de cations Ca²⁺, de 0 à 7% de cations K⁺ et/ou de 4 à 11% de cations Na⁺;
- la zéolite contient, en outre, au moins un autre cation choisi parmi les cations lithium, baryum, strontium, zinc, cuivre, argent, magnésium, gallium et germanium;
- l'adsorption est réalisée dans au moins un adsorbeur et, de préférence, dans au moins deux adsorbeurs, de préférence deux adsorbeurs fonctionnant en parallèle;
- on opère à une température de -40°C à +80°C, de préférence de 0°C à 60°C;
- il est choisi dans le groupe formé par les procédés TSA et PSA, de préférence TSA;
- on opère à une pression d'adsorption de 10⁵ à 10⁷ Pa, de préférence 3.10⁵ et 6.10⁶ Pa;
- il comprend au moins une étape de régénération de l'adsorbant;
- le flux gazeux à purifier est de l'air. Dans le cadre de la présente invention, on comprend par air, de l'air ambiant atmosphérique extérieur ou capté à l'intérieur d'un bâtiment ou d'une enceinte chauffée ou non, lequel air ambiant peut éventuellement subir un prétraitement, telle une catalyse oxydative ou une dessiccation préalable au moins partielle, ou une modification de sa teneur en l'un ou plusieurs de ses constituants, tel notamment un ajout ou un retrait d'oxygène ou d'azote par exemples.
- il comprend au moins une étape d'élimination d'au moins une impureté choisie dans le groupe formé par la vapeur d'eau et les hydrocarbures;
- il comprend au moins une étape de séparation cryogénique d'au moins une partie de l'air purifié, de préférence une étape de distillation cryogénique de l'air purifié avec récupération d'azote, d'argon et/ou d'oxygène.

L'invention va maintenant être décrite plus en détail à l'aide d'exemples donnés à titre illustratif, mais non limitatif.

### Exemple 1: synthèse de la zéolite LSX.

La synthèse d'une zéolite X de structure faujasite ayant un rapport Si/Al inférieur ou égal à 1.15, encore appelé zéolite LSX, est réalisé de manière classique, tel que décrit notamment dans le document GB-A-1580928.

La zéolite LSX obtenue contient de 10 à 40% de cations potassium, en général de 20 à 30%, et de 60 à 90% de cations sodium; toutefois, la présence éventuelle d'autres cations n'est pas à exclure.

Une zéolite LSX contenant à la fois des ions sodium et potassium est habituellement appelée NaKLSX.

Partant d'une zéolite NaKLSX ainsi synthétisée, il est possible de faire varier la teneur de celle-ci en ses cations potassium et/ou sodium par un procédé d'échange d'ions classiques.

Par exemple, pour augmenter la quantité de cations sodium dans la zéolite LSX obtenue par le procédé susmentionné, on procède à un échange d'ions de manière à éliminer au moins une partie des cations potassium qu'elle contient; ceux-ci étant remplacés par des cations sodium.

Ainsi, partant d'une NaKLSX contenant, par exemple, 30% d'ions K⁺ et 70% d'ions Na⁺, on peut obtenir une NaKLSX contenant 10% d'ions K⁺ et 90% d'ions Na⁺ en traitant la zéolite NaKLSX de départ avec une solution de chlorure de sodium par exemple.

De même, pour incorporer au sein d'une NaKLSX des cations d'un ou plusieurs autres métaux, tels des cations calcium, on procède à un échange d'ions de manière à substituer au moins une partie des cations potassium et/ou sodium contenus dans la NaKLSX de départ par des cations calcium, de manière à obtenir les taux d'échange prédéterminés. Ainsi, comme précédemment, partant d'une NaKLSX on obtient une CaNaKLSX, c'est-à-dire une NaKLSX contenant en plus des ions calcium, en y introduisant lesdits ions calcium par substitution de cations K⁺ et/ou Na⁺.

En effet, comme nous le verrons ci-après, les différents types de cations contenus dans une zéolite LSX et leurs proportions respectives (taux d'échange) influent considérablement sur notamment la capacité d'adsorption du CO₂ et/ou sur la capacité d'adsorption de l'éthylène de la zéolite, lorsque celle-ci est mise en oeuvre dans un procédé de type PSA ou TSA destiné à éliminer le CO₂ contenu dans un flux gazeux, tel l'air.

### Exemple 2

De l'azote artificiellement pollué avec 400 ppm de C02 est mis en contact avec des particules de zéolites, à une pression de 6.10⁵ Pa, à une température de 25°C et à un débit 2.4 Nm³/h dans un adsorbeur de laboratoire de 30 mm de diamètre.

Un premier essai est réalisé en utilisant une zéolite de type NaKLSX contenant environ moins de 10% de cations K⁺ et des cations Na⁺ pour le reste.

Un deuxième essai est réalisé en utilisant une zéolite de type 13X classique ayant un rapport Si/Al supérieur 1.25 et contenant essentiellement des cations sodium.

Après comparaison des résultats, il s'avère qu'une zéolite LSX selon l'essai 1 permet une augmentation de performance en adsorption d'environ 43% par rapport à une zéolite classique de type 13X, selon le deuxième essai.

En effet, lorsque l'on utilise une zéolite NaKLSX, le temps de perçage du CO₂ est de 172 mn environ, alors qu'une zéolite 13X, on assiste à une percée du CO₂ au bout de seulement 120 mn; on appelle temps de perçage la durée séparant le début de l'opération d'adsorption et l'apparition de CO₂ en aval du lit d'adsorbant.

Cet exemple comparatif permet de rendre compte de la supériorité d'une zéolite de type NaKLSX sur une zéolite classique.

### Exemple 3

De manière analogue à l'exemple 2, un flux d'air contenant environ 350 ppm de CO₂ est mis en contact, d'une part, avec une zéolite NaKLSX et, d'autre part, avec une zéolite 13X classique.

Les résultats obtenus sont analogues à ceux de l'exemple 2.

### EXEMPLE 4

Outre le CO₂, l'air atmosphérique contient d'autres impuretés qu'il est nécessaire d'éliminer avant de procédé à une distillation cryogénique dudit air, à savoir notamment les impuretés de type vapeur d'eau et/ou éthylène (C₂H₄).

En effet, l'éthylène est un hydrocarbure que l'on retrouve souvent dans l'air atmosphérique sur les sites de production industriels et qui a la particularité de s'adsorber encore plus difficilement que le CO₂ sur les adsorbants classiques et présente, de là, un risque d'accumulation et explosion pour les unités cryogéniques de séparation d'air.

L'élimination des impuretés de type vapeur d'eau peut être réalisée par adsorption soit directement sur le lit de zéolite LSX selon l'invention, soit sur un lit de particules dessicantes placées en amont du lit de zéolite LSX, par exemple, un lit de gel de silice, d'alumine ou de zéolite.

L'élimination des impuretés éthylène se trouvant dans le flux d'air à épurer est réalisée directement sur le lit de zéolite LSX de l'invention, par exemple une zéolite LSX contenant moins de 50% de cations calcium, et des cations sodium et potassium pour le reste.

Des essais réalisés sur un flux d'air contenant 450 ppm de CO₂ et environ 15 ppm d'éthylène réalisés dans des conditions analogues à celles de l'exemple 3, ont montré qu'un lit unique de zéolite CaNaKLSX échangée à 60% avec des cations calcium permet d'arrêter lesdites impuretés C₂H₄ et CO₂.

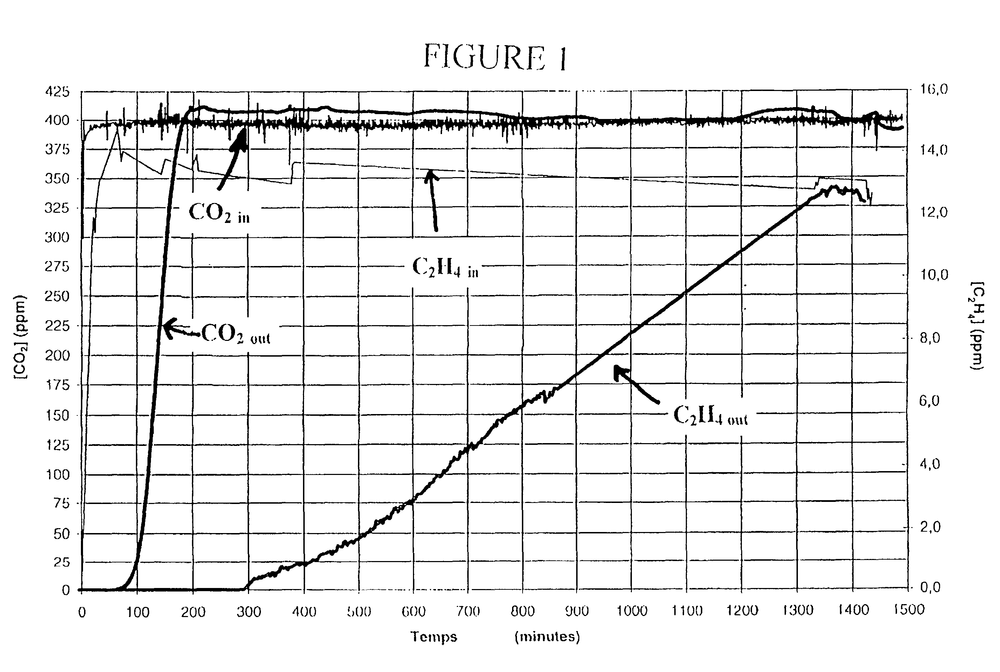

Plus précisément, la Figure 1 représente, en ordonnées, les quantités (en ppm) de CO₂ et de C₂H₄ adsorbées au cours du temps (en minutes), en abscisses, sur une zéolite X échangée à 96% avec des ions Ca²⁺; les autres ions étant essentiellement des ions Na⁺ et/ou K⁺ (zéolite, selon l'invention, NaKCaLSX, NaCaLSX ou KCaLSX).

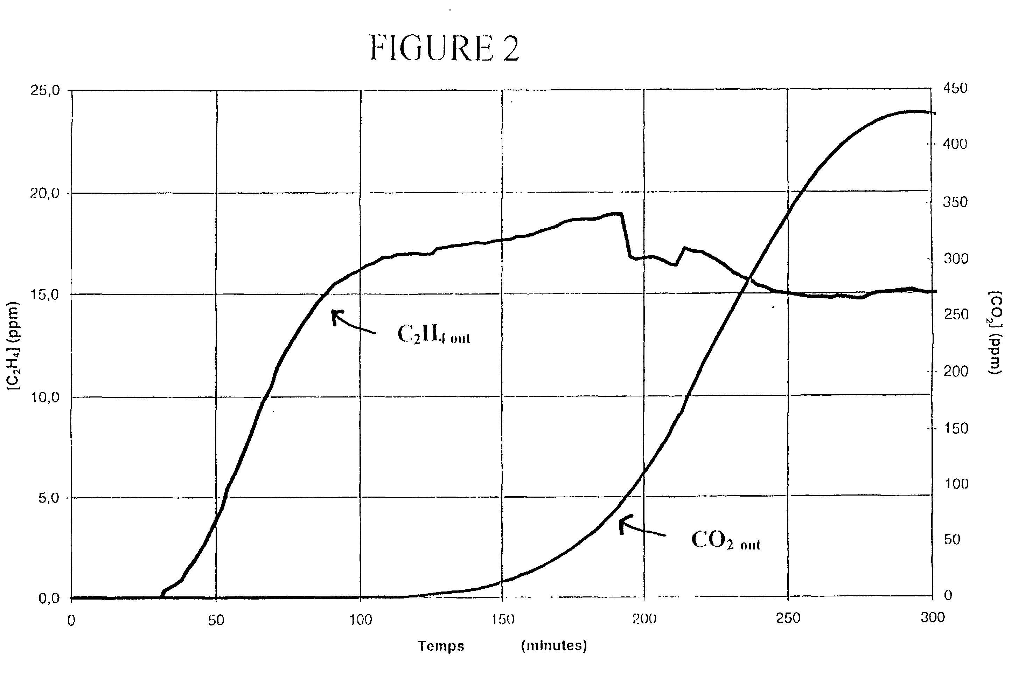

De même, la Figure 2 schématise les quantités (en ppm) de CO₂ et C₂H₄ adsorbées au cours du temps (en minutes) sur une zéolite de type NaKLSX.

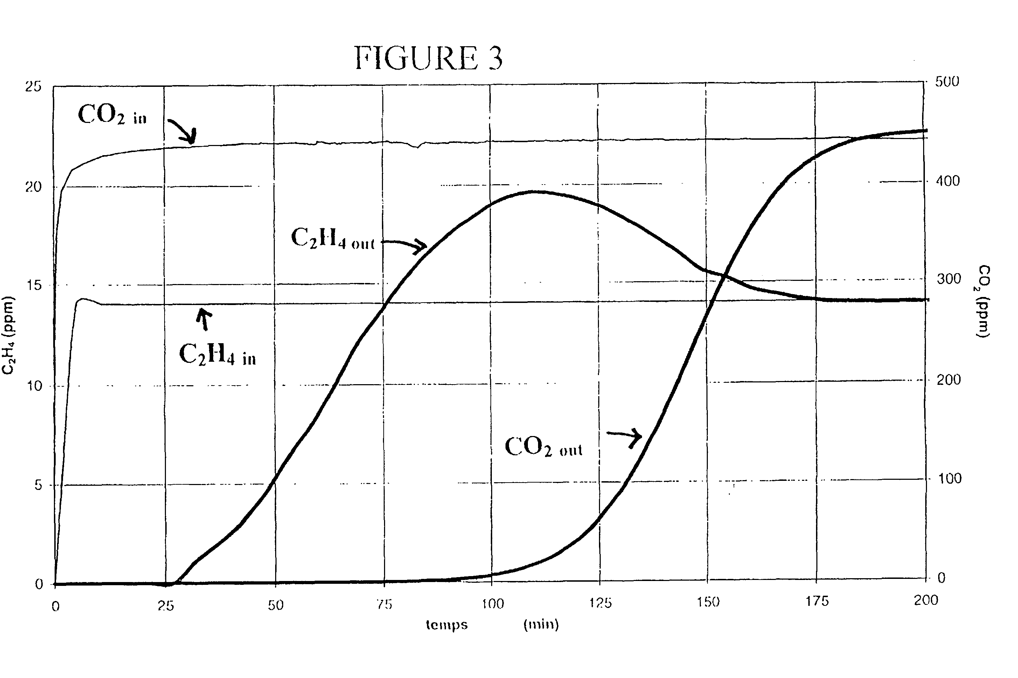

A titre comparatif, la Figure 3 représente, quant à elle, les quantités de CO₂ et C₂H₄ adsorbées au cours du temps (en minutes) sur une zéolite de type 13X classique.

Il est à noter que sur les courbes des Figures 1 à 3, C₂H₄ in et CO₂ in désignent les quantités respectives de C₂H₄ et CO₂ en entrée de la zone d'épuration, c'est-à-dire avant purification, et C₂H₄ out et CO₂ out désignent les quantités respectives de C₂H₄ et CO₂ en sortie, c'est-à-dire après purification.

En outre, la hauteur du lit d'adsorbant mis en oeuvre dans les essais représentés par les Figures 1 à 3 est, respectivement, de 80 cm, 35 cm et 20 cm.

Il ressort notamment des Figures 1 à 3 que lorsqu'on utilise un lit unique de zéolite LSX pour arrêter à la fois le CO₂ et l'éthylène, on utilise de préférence, une zéolite CaNaKLSX contenant la quantité de cations calcium juste nécessaire et suffisante pour que le CO₂ et l'éthylène percent en même temps, de sorte de réduire le coût de fabrication de ladite zéolite et subséquemment les coûts du procédé de séparation d'air, c'est-à-dire environ 30 à 80% de cations calcium; les autres cations étant principalement des cations potassium et/ou sodium (Figure 2).

Préférentiellement, on fait précéder le lit d'adsorbant précité par un lit de particules dessicantes, tels de l'alumine, du gel de silice ou des particules zéolitiques, de manière à éliminer la vapeur d'eau susceptible de se trouver dans le flux gazeux à épurer, ainsi que susmentionné.

## Revendications

1. Procédé de séparation du dioxyde de carbone (CO₂) et de l'éthylène contenus dans un flux gazeux, dans lequel on adsorbe le dioxyde de carbone et l'éthylène sur un lit unique formé d'une zéolite X ayant un rapport Si/Al de 1 à 1.5 environ et contenant au maximum 35% de cations K⁺, au moins 1% de cations Na⁺ et de 30 à 96% de cations Ca²⁺.

2. Procédé selon la revendication 1, **caractérisé en ce que** la zéolite a un rapport Si/Al de 1 à 1.15 environ, de préférence de l'ordre de 1.

3. Procédé selon l'une des revendications 1 ou 2, **caractérisé en ce que** la zéolite contient de 0.01% à 25% de cations K⁺, de préférence moins de 12% de cations K⁺.

4. Procédé selon l'une des revendications 1 à 3, **caractérisé en ce que** la zéolite contient au moins 50% de cations Ca²⁺.

5. Procédé selon l'une des revendications 1 à 3, **caractérisé en ce que** la zéolite contient de 80 à 96% de cations Ca²⁺.

6. Procédé selon la revendications 5, **caractérisé en ce que** la zéolite contient au moins 66% de cations Ca²⁺.

7. Procédé selon l'une des revendications 1 à 6, **caractérisé en ce qu'**il est choisi dans le groupe formé par les procédés TSA et PSA, de préférence TSA.

8. Procédé selon l'une des revendications 1 à 7, **caractérisé en ce qu'**on opère à une pression d'adsorption de 10⁵ à 10⁷ Pa.

9. Procédé selon l'une des revendications 1 à 8, **caractérisé en ce qu'**on opère à une température de -40°C à +80°C, de préférence à une température de 0 à +60°C.

10. Procédé selon l'une des revendications 1 à 9, **caractérisé en ce que** le flux gazeux à purifier est de l'air.

11. Procédé selon l'une des revendications 1 à 10, **caractérisé en ce qu'**il comprend une étape d'élimination de la vapeur d'eau.

12. Procédé selon l'une des revendications 1 à 11, **caractérisé en ce qu'**il comprend au moins une étape d'élimination de la vapeur d'eau sur un lit de particules dessicantes placé en amont du lit de zéolite servant à éliminer le dioxyde de carbone et l'éthyléne, de préférence un lit de gel de silice, d'alumine ou de zéolite.

13. Procédé selon l'une des revendications 1 à 12, **caractérisé en ce qu'**il comporte au moins une étape de séparation cryogénique d'au moins une partie de l'air purifié.

## Claims

1. Process for separating carbon dioxide (CO₂) and ethylene which are contained in a gas stream, in which the carbon dioxide and the ethylene are adsorbed over a single bed formed from a zeolite-X having an Si/Al ratio ranging from 1 to 1.5 approximately and containing at most 35% of K⁺ cations, at least 1% of Na⁺ cations and from 30% to 96% of Ca²⁺ cations.

2. Process according to Claim 1, **characterized in that** the zeolite has an Si/Al ratio ranging from 1 to 1.15 approximately and preferably of about 1.

3. Process according to either of Claims 1 and 2, **characterized in that** the zeolite contains from 0.01% to 25% of K⁺ cations and preferably less than 12% of K⁺ cations.

4. Process according to one of Claims 1 to 3, **characterized in that** the zeolite contains at least 50% of Ca²⁺ cations.

5. Process according to one of Claims 1 to 3, **characterized in that** the zeolite contains from 80 to 96% of Ca²⁺ cations.

6. Process according to Claim 5, **characterized in that** the zeolite contains at least 66% of Ca²⁺ cations.

7. Process according to one of Claims 1 to 6, **characterized in that** it is chosen from the group formed by the TSA and PSA processes, and is preferably a TSA process.

8. Process according to one of Claims 1 to 7, **characterized in that** it is carried out at an adsorption pressure ranging from 10⁵ to 10⁷ Pa.

9. Process according to one of Claims 1 to 8, **characterized in that** it is carried out at a temperature ranging from -40°C to +80°C and preferably at a temperature ranging from 0°C to +60°C.

10. Process according to one of Claims 1 to 9, **characterized in that** the gas stream to be purified is air.

11. Process according to on of Claims 1 to 10, **characterized in that** it comprises a step of removing the water vapour.

12. Process according to one of Claims 1 to 11, **characterized in that** it comprises at least one step of removing the water vapour over a bed of dessicating particles, this being placed up stream of the zeolite bed serving to remove the carbon dioxide and ethylene, preferably a silica gel, alumina or zeolite bed.

13. Process according to one of Claims 1 to 12, **characterized in that** it comprises at least one step of cryogenically separating at least part of the purified air.

## Patentansprüche

1. Verfahren zur Abtrennung von in einem Gasstrom enthaltenem Kohlendioxid (CO₂) und Ethylen, bei dem man das Kohlendioxid und das Ethylen an einer einzigen Schüttung aus einem Zeolith X, der ein Si/Al-Verhältnis von ungefähr 1 bis 1,5 aufweist und höchstens 35% K⁺-Kationen, mindestens 1% Na⁺-Kationen und 30 bis 96% Ca²⁺-Kationen enthält, adsorbiert.

2. Verfahren nach Anspruch 1, **dadurch gekennzeichnet, daß** der Zeolith ein Si/Al-Verhältnis von ungefähr 1 bis 1,15, vorzugsweise etwa 1, aufweist.

3. Verfahren nach Anspruch 1 oder 2, **dadurch gekennzeichnet, daß** der Zeolith 0,01 bis 25% K⁺-Kationen, vorzugsweise weniger als 12% K⁺-Kationen, enthält.

4. Verfahren nach einem der Ansprüche 1 bis 3, **dadurch gekennzeichnet, daß** der Zeolith mindestens 50% Ca²⁺-Kationen enthält.

5. Verfahren nach einem der Ansprüche 1 bis 3, **dadurch gekennzeichnet, daß** der Zeolith mindestens 80 bis 96% Ca²⁺-Kationen enthält.

6. Verfahren nach Anspruch 5, **dadurch gekennzeichnet, daß** der Zeolith mindestens 66% Ca²⁺-Kationen enthält.

7. Verfahren nach einem der Ansprüche 1 bis 6, **dadurch gekennzeichnet, daß** es aus der Gruppe bestehend aus TSA- und PSA-Verfahren, vorzugsweise TSA-Verfahren, stammt.

8. Verfahren nach einem der Ansprüche 1 bis 7, **dadurch gekennzeichnet, daß** man bei einem Adsorptionsdruck von 10⁵ bis 10⁷ Pa arbeitet.

9. Verfahren nach einem der Ansprüche 1 bis 8, **dadurch gekennzeichnet, daß** man bei einer Temperatur von -40°C bis +80°C, vorzugsweise bei einer Temperatur von 0 bis +60°C, arbeitet.

10. Verfahren nach einem der Ansprüche 1 bis 9, **dadurch gekennzeichnet, daß** es sich bei dem zu reinigenden Gasstrom um Luft handelt.

11. Verfahren nach einem der Ansprüche 1 bis 10, **dadurch gekennzeichnet, daß** man einen Schritt zur Wasserdampfabtrennung durchführt.

12. Verfahren nach einem der Ansprüche 1 bis 11, **dadurch gekennzeichnet, daß** man mindestens einen Schritt zur Wasserdampfabtrennung an einer über der Zeolithschüttung zur Kohlendioxid- und Ethylenabtrennung angeordneten Schüttung von wasserentziehend wirkenden Teilchen, vorzugsweise einer Kieselgel-, Aluminiumoxid- oder Zeolithschüttung, durchführt.

13. Verfahren nach einem der Ansprüche 1 bis 12, **dadurch gekennzeichnet, daß** man mindestens einen Schritt der Tieftemperaturzerlegung mindestens eines Teils der gereinigten Luft durchführt.
